# EUROPÄISCHE PATENTSCHRIFT

(11) **EP 2 660 083 B1**
(45) Veröffentlichungstag und Bekanntmachung des Hinweises auf die Patenterteilung: **20.12.2017**
(21) Anmeldenummer: 13002374.0
(22) Anmeldetag: 03.05.2013
(51) Int. Cl.: B60G 7/00, B60G 9/00, B60G 11/27, B60G 11/04, B60G 11/46

(54) **Parabel-Lenkerfeder und Verfahren zu deren Herstellung**
Parabolic trailing arm and method for its production
Bras de guidage parabolique et son procédé de fabrication

(30) Priorität: 05.05.2012 DE 102012009012
(43) Veröffentlichungstag der Anmeldung: 06.11.2013
(73) Patentinhaber: Schomäcker Federnwerk GmbH, 49324 Melle (DE)
(72) Erfinder: Temmen, Hubert, 49716 Meppen (DE); Bispink, Torsten Dr, 49086 Osnabrück (DE)
(74) Vertreter: Pott, Ulrich

(56) Entgegenhaltungen:
- EP-A1- 1 632 370
- EP-A2- 1 138 432
- DE-A1-102005 038 274
- DE-U1-202005 004 964

## Beschreibung

Die Erfindung bezieht sich auf einen Parabel-Lenkerfeder mit einem an einem Parabel-Lenkerfederende vorgesehenen gerollten Lenkerauge und einem dem Lenkerfederauge gegenüberliegenden Parabel-Lenkerfederbereich, wobei zwischen dem Parabellenkerauge und dem gegenüberliegenden Parabel-Lenkerfederendbereich ein gegensinnig abgekröpfter Zwischenbereich vorgesehen ist.

Parabel-Lenkerfeder sind wichtige Bauteile für insbesondere Nutzfahrzeugauflieger und -anhänger, bei denen sich Luftfederungssysteme mit Parabel-Lenkerfedern weitgehend durchgesetzt haben. Parabel-Lenkerfedern sind jedoch schwergewichtige Bauteile, wobei in den letzten Jahren starke Bemühungen zu beobachten waren, die für die Produktion solcher Parabel-Lenker erforderliche Energieaufwendungen zu verringern und auch das Gewicht zu reduzieren.

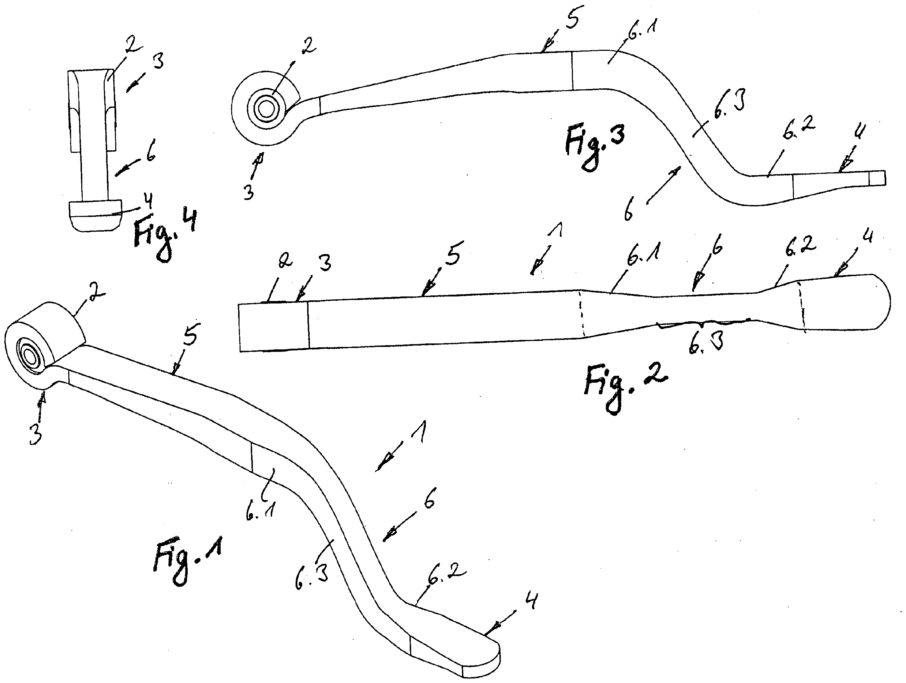

Die Entgegenhaltung 1 (EP 1 632 370 B1) offenbart einen Lenker mit einem einenends gerollten Auge und einem anderenends abgeflachten Endteil. Nach den dortigen Ausführungsbeispielen nach den Fig. 1 bis 5 und 7 fehlt es diesem Lenker an einem gegensinnig abgekröpften Zwischenbereich. Dort ist ein abgekröpfter Zwischenbereich vorgesehen, der eine übereinstimmende Breite wie angrenzende Bereiche hat.

Aus der DE 10 2005 038 274 A1 ist ein Radaufhängungslenker bekannt, der keinen gegensinnig abgekröpften Zwischenbereich aufweist. Dieser ist vielmehr so ausgebildet, dass er eine obere Wandung und eine untere Wandung mit einem zwischen diesen Wandungen gelegenen aufrechten Mittelstegbereich aufweist, in dem die Aufnahmen für eine Achse ausgebildet sind. Ein solcher Radaufhängungslenker ist nicht durch einen Walzvorgang zu bearbeiten.

Aus der EP 1 138 432 A2 ist ein Parabellenker der gattungsgemäßen Art bekannt, der einen gegensinnig abgekröpften Zwischenbereich ohne eine Einschnürung aufweist.

Es ist Aufgabe der vorliegenden Erfindung, eine Parabel-Lenkerfeder mit einem verringerten Gewicht vorzustellen. Des Weiteren soll ein Verfahren beschrieben werden zur Herstellung einer solchen Parabel-Lenkerfeder mit einem verringerten Eigengewicht.

Zur Lösung sich dieser Aufgabe zeichnet sich die Parabel-Lenkerfeder durch die Merkmale des Anspruchs 1 aus. Wesentliche Vorteile sind in den Ansprüchen 2 bis 5 beschrieben.

Bei der erfindungsgemäßen Parabel-Lenkerfeder wird der gegensinnig abgekröpfte Zwischenbereich durch Querwalzen eingeschnürt bei gleicher Länge, so dass durch dieses Querwalzen bei gleicher Festigkeit bei einer Parabel-Lenkerfeder eine wesentliche Menge an Material für das zu bearbeitende Werkstück einzusparen ist. Damit geht eine erhebliche Gewichtseinsparung bei der fertigen Parabel-Lenkerfeder einher.

So ist eine 20%-ige Einschnürung, bezogen auf die maximale Gesamtbreite der Parabel-Lenkerfeder, schon mit einer erheblichen Gewichtseinsparung verbunden. Besonders bevorzugt wird aber eine Einschnürung, die darauf hinausläuft, dass man ein Verhältnis von 70 : 40 die jeweiligen Querabmessungen einmal im Bereich maximaler Breite der Parabel-Lenkerfeder gegenüber der maximalen Breite im Rahmen der größten Einschnürung vorliegen hat. Durch ein Querwalzen kann ein stetiger Übergang von maximaler Breite einer Parabel-Lenker zu einem eingeschnürten Bereich dargestellt werden. Daran kann sich ein längerer Abschnitt maximaler Einschnürung anschließen, von wo es dann wieder mit stetiger Erweiterung in den Abschnitt maximaler Parabel-Lenkerfederbreite übergeht, der dem Endabschnitt entspricht, der dem Lenkerauge gegenüberliegt.

So können auch schon in Bereichen, in denen sich die gegensinnigen Abkröpfungen befinden, Einschnürungsbereiche ausgebildet sein, ohne die Festigkeit der Parabel-Lenkerfeder zu beeinträchtigen.

Wie im Anspruch 6 vorgesehen, kann bei einer üblichen vorausgehenden und sich anschließenden Bearbeitung bzw. Herstellung der Parabel-Lenkerfeder das Querwalzen in den Gesamtbearbeitungs- und Herstellungsvorgang integriert werden, ohne dass dies zu einem nennenswerten Mehraufwand während des gesamten Herstellungsprozesses führt.

Zur weiteren Erläuterung der Erfindung wird auf die weiteren Ausführungen und die Zeichnung verwiesen. In der Zeichnung zeigen:
- Fig. 1: ein Ausführungsbeispiel einer Parabel-Lenkerfeder gemäß der Erfindung in einer perspektivischen Darstellung;
- Fig. 2: eine Draufsicht auf das Ausführungsbeispiel nach Fig. 1;
- Fig. 3: eine Seitenansicht auf das Ausführungsbeispiel nach Fig. 1, und
- Fig. 4: eine Vorderansicht auf das Ausführungsbeispiel nach Fig. 1.

In der Zeichnung sind grundsätzlich gleichwirkende Teile mit übereinstimmenden Bezugsziffern versehen. Allgemein mit 1 ist die Parabel-Lenkerfeder 1 beziffert mit einem vorderen Parabel-Lenkerfederauge 2, der in dem vorderen Parabel-Lenkerfederarmabschnitt 3 gelegen ist, und mit einem hinteren Parabel-Lenkerfederende 4, das dem vorderen Ende 3 mit dem Lenkerauge 2 gegenüberliegend angeordnet ist.

An das Lenkerauge 2 schließt sich ein Abschnitt 5 mit maximaler Parabel-Lenkerfederbreite an, der beispielsweise 70 mm betragen kann.

Zwischen dem Abschnitt 5 und dem hinteren Parabel-Lenkerfederarmende 4 ist ein Zwischenbereich 6 gelegen, der eingeschnürt ausgebildet ist. Dieser kann in dem mittleren Abschnitt 6.3 zwischen den stetigen Übergängen 6.1 und 6.2 den Abschnitt 6.3 maximaler Einschnürung haben. Beispielsweise kann gegenüber einer maximalen Parabel-Lenkerfederbreite im Abschnitt 5 von 70 mm der Abschnitt 6.3 im Bereich des gegensinnig abgekröpften Zwischenbereiches 6 (Fig. 3) 40 mm betragen. Die Einschnürung erfolgt durch Querwalzen am zu bearbeitenden Werkstück.

## Patentansprüche

1. Parabel-Lenkerfeder mit einem an einem Parabel-Lenkerfederende (3) vorgesehenen gerollten Auge (2) und einem dem Lenkerauge (2) gegenüberliegenden Parabel-Lenkerfederendbereich (4), wobei zwischen dem Lenkerauge (2) und dem gegenüberliegenden Parabel-Lenkerfederendbereich (4) ein gegensinnig abgekröpfter Zwischenbereich (6) vorgesehen ist, **dadurch gekennzeichnet, dass** der gegensinnig abgekröpfte Zwischenbereich (6) als gegenüber den Querabmessungen der sich anschließenden Parabel-Lenkerfederabschnitte (4, 5) eingeschnürt ausgebildet ist, wobei der gegensinnig abgekröpfte Zwischenbereich (6) durch Querwalzen eingeschnürt ist bei gleicher Länge.

2. Parabel-Lenkerfeder nach Anspruch 1, **dadurch gekennzeichnet, dass** die Einschnürung des gegensinnig abgekröpften Zwischenbereiches (6) zu beiden Außenseiten der Parabel-Lenkerfeder (1) vorgesehen ist.

3. Parabel-Lenkerfeder nach Anspruch 1 oder 2, **dadurch gekennzeichnet, dass** eine Einschnürung zu beiden Seiten der Parabel-Lenkerfeder (1) bis zu 50 % der maximalen Parabel-Lenkerfederbreite vorgesehen ist.

4. Parabel-Lenkerfeder nach einem der Ansprüche 1 bis 3, **dadurch gekennzeichnet, dass** ausgehend von Parabel-Ienkerfederabschnitten (5) mit maximaler Parabel-Lenkerfederbreite der gegensinnig abgekröpfte Zwischenbereich (6) sich stetig zunächst verkleinernd ausgebildet ist (Abschnitt (6.1)) bis in einen Bereich (6.3) maximaler Einschnürung und sich ausgehend davon wieder stetig erweitert bis zum Parabel-Lenkerfederabschnitt (4) maximaler Parabel-Lenkerfederbreite.

5. Parabel-Lenkerfeder nach einem der Ansprüche 1 bis 4, **dadurch gekennzeichnet, dass** eine Einschnürung vorgesehen ist in einem Verhältnis von 70 mm maximaler Parabel-Lenkerfederbreite bis hin zu 40 mm maximaler Einschnürung im gegensinnig abgekröpften Zwischenbereich (6).

6. Verfahren zur Herstellung einer Parabel-Lenkerfeder (1), bei dem in einem Umformprozess ein Werkstück zu einer Parabel-Lenkerfeder geformt wird, in dem ein vorderer Parabel-Lenkerfederarmabschnitt (3, 5) erwärmt, ausgewalzt und gerichtet und durch Rollen mit einem Lenkerauge (2) versehen wird, und bei dem ein hinterer Parabel-Lenkerfederarmabschnitt (9) erwärmt und ausgewalzt werden und wobei der vordere Parabel-Lenkerfederarmabschnitt (5) und der hintere Parabel-Lenkerfederarmabschnitt (9) gegensinnig zueinander abgekröpft werden durch Formung eines gegensinnig abgekröpften Zwischenbereiches (6), **dadurch gekennzeichnet, dass** der gegensinnig abgekröpfte Zwischenbereich (6) durch Querwalzen mit einer Einschnürung versehen wird zur Herstellung einer Parabel-Lenkerfeder nach einem der Ansprüche 1 bis 5.

## Claims

1. Parabolic trailing arm comprising a rolled eye (2), provided on the end (3) of the parabolic trailing arm, and a parabolic trailing arm end region (4), located opposite the trailer eye (2), an intermediate region (6), which is cranked in opposite directions, being provided between the trailer eye (2) and the opposite parabolic trailing arm end region (4), **characterised in that** the intermediate region (6), which is cranked in opposite directions, is formed so as to be constricted relative to the transverse dimensions of the adjacent parabolic trailing arm portions (4, 5), the intermediate region (6), which is cranked in opposite directions, being constricted at the same length by transverse rolling.

2. Parabolic trailing arm according to claim 1, **characterised in that** the intermediate region (6), which is cranked in opposite directions, is constricted on both outer surfaces of the parabolic trailing arm (1).

3. Parabolic trailing arm according to either claim 1 or claim 2, **characterised in that** there is constriction on both sides of the parabolic trailing arm (1) up to 50% of the maximum parabolic trailing arm width.

4. Parabolic trailing arm according to any of claims 1 to 3, **characterised in that,** starting from parabolic trailing arm portions (5) having maximum parabolic trailing arm width (portion (6.1)), the intermediate region (6), which is cranked in opposite directions, is formed so as to initially continuously reduce in size until it reaches a region (6.3) of maximum constriction and, starting therefrom, continuously expands again up to the parabolic trailing arm portion (4) of maximum parabolic trailing arm width.

5. Parabolic trailing arm according to any of claims 1 to 4, **characterised in that** there is constriction in a ratio of 70 mm maximum parabolic trailing arm width to 40 mm maximum constriction in the intermediate region (6), which is cranked in opposite directions.

6. Method for producing a parabolic trailing arm (1), in which a workpiece is shaped, in a shaping process, into a parabolic trailing arm by a front parabolic trailing arm portion (3, 5) being heated, rolled out and straightened and provided with a trailer eye (2) by rolling, and in which a rear parabolic trailing arm portion (9) is heated and rolled out, and the front parabolic trailing arm portion (5) and the rear parabolic trailing arm portion (9) being cranked in opposite directions to one another by forming an intermediate region (6) that is cranked in opposite directions, **characterised in that** the intermediate region (6), which is cranked in opposite directions, is constricted by transverse rolling for producing a parabolic trailing arm according to any of claims 1 to 5.

## Revendications

1. Ressort de suspension parabolique comprenant un oeillet enroulé (2) prévu à une extrémité de ressort de suspension parabolique (3) et une région d'extrémité de ressort de suspension parabolique (4) opposée à l'oeillet de suspension (2), un région intermédiaire (6) coudée en sens opposé étant prévue entre l'oeil de suspension (2) et la région d'extrémité de ressort de suspension parabolique opposée (4), **caractérisé en ce que** la région intermédiaire (6) coudée en sens opposé a une conformation rétrécie par rapport aux dimensions transversales des parties de ressort de suspension parabolique (4, 5) se raccordant à celle-ci, la région intermédiaire (6) coudée en sens opposé est rétrécie par laminage transversal pour une même longueur.

2. Ressort de suspension parabolique selon la revendication 1, **caractérisé en ce que** le rétrécissement de la région intermédiaire (6) coudé en sens opposé est prévue des deux côtés extérieurs du ressort de suspension parabolique (1).

3. Ressort de suspension parabolique selon la revendication 1 ou 2, **caractérisé en ce qu'**il est prévu un rétrécissement des deux côtés du ressort de suspension parabolique (1) jusqu'à 50% de la largeur de ressort de suspension parabolique maximale.

4. Ressort de suspension parabolique selon l'une des revendications 1 à 3, **caractérisé en ce que**, à partir des parties de ressort de suspension parabolique (5) de largeur de ressort de suspension parabolique maximale, la région intermédiaire (6) coudée en sens opposé est formé tout d'abord en diminuant (partie (6.1)) jusque dans une région (6.3) de rétrécissement maximal puis à nouveau en s'élargissant constamment jusqu'à la partie de ressort de suspension parabolique (4) de largeur de ressort de suspension parabolique maximale.

5. Ressort de suspension parabolique selon l'une des revendications 1 à 4, **caractérisé en ce qu'**il est prévu un rétrécissement dans un rapport de largeur de ressort de suspension parabolique maximale de 70 mm à un rétrécissement maximal de 40 mm dans la région intermédiaire (6) coudée en sens opposé.

6. Procédé de fabrication d'un ressort de suspension parabolique (1) dans lequel une pièce est mise sous la forme d'un ressort de suspension parabolique dans un processus de formage, dans lequel une partie de bras de ressort de suspension parabolique avant (3, 5) est chauffée, laminée et dressée et munie par laminage d'un oeillet de suspension (2), et dans lequel une partie de bras de ressort de suspension parabolique arrière (9) est chauffée et laminée, la partie de bras de ressort de suspension parabolique avant (5) et la partie de bras de ressort de suspension parabolique arrière (9) étant coudées dans des sens opposés par formage d'une région intermédiaire (6) coudée en sens opposé, **caractérisé en ce que** la région intermédiaire (6) coudée en sens opposé est munie par laminage transversal d'un rétrécissement pour fabriquer le ressort de suspension parabolique selon l'une des revendications 1 à 5.
